# EUROPÄISCHE PATENTSCHRIFT

(11) **EP 1 322 917 B1**
(45) Veröffentlichungstag und Bekanntmachung des Hinweises auf die Patenterteilung: **24.01.2007**
(21) Anmeldenummer: 01974044.8
(22) Anmeldetag: 14.09.2001
(51) Int. Cl.: G01D 5/245, F02D 41/34

(54) **DREHWINKELGEBER, EINSPRITZANLAGE UND ZUGEHÖRIGES BETRIEBSVERFAHREN**
ROTATION ANGLE DETECTOR, INJECTION SYSTEM AND CORRESPONDING OPERATING METHOD
DETECTEUR D'ANGLE DE ROTATION, DISPOSITIF D'INJECTION ET PROCEDE DE FONCTIONNEMENT

(30) Priorität: 28.09.2000 DE 10048169
(43) Veröffentlichungstag der Anmeldung: 02.07.2003
(73) Patentinhaber: SIEMENS AKTIENGESELLSCHAFT, 80333 München (DE)
(72) Erfinder: LINGENER, Uwe, 39221 Pechau (DE)
(86) Internationale Anmeldenummer: PCT/DE2001/003547
(87) Internationale Veröffentlichungsnummer: WO 2002/027274

(56) Entgegenhaltungen:
- DE-A- 19 638 386
- US-A- 4 827 886
- US-A- 5 869 962

## Beschreibung

Die Erfindung betrifft einen Drehwinkelgeber zur Erfassung der Winkelstellung einer Welle, insbesondere zur Erfassung der Winkelstellung einer Nockenwelle oder einer Kurbelwelle einer Brennkraftmaschine mit mehreren Brennräumen, gemäß dem Oberbegriff des Anspruchs 1, eine Einspritzanlage gemäß Anspruch 10 sowie ein Betriebsverfahren für eine derartige Einspritzanlage gemäß Anspruch 11.

Ein bekannter Drehwinkelgeber (US 5,869,962) weist ein Zahnrad auf, auf dem zwei unterschiedliche Typen von Markierungen angebracht sind.

Des Weiteren ist ein Stellungsgeber für eine drehbare Welle eines Fahrzeugs bekannt (DE 196 38 386), der ein Geberrad aufweist das, mit einer drehbaren Welle drehfest verbunden ist und auf seinem Umfang in regelmäßiger Anordnung eine Folge von Zähnen sowie eine Zahnanomalie aufweist.

Darüber hinaus ist eine Vorrichtung zum Bestimmen eines Kurbelwellenwinkels bekannt (US 4,827,886), bei der ein erstes Geberrad mit der Kurbelwelle und ein zweites Geberrad mit der Nockenwelle drehfest verbunden ist.

Bei Brennkraftmaschinen mit einer Einspritzanlage erfolgt die Festlegung des Einspritzzeitpunktes herkömmlicherweise in Abhängigkeit von der Winkelstellung der Kurbelwelle. Bei einem Viertaktmotor erfolgen die Einspritzvorgänge für einen bestimmten Brennraum jedoch nicht bei jeder Umdrehung, so dass zur Festlegung des Einspritzzeitpunktes zusätzlich die Phasenlage der Kurbelwelle bekannt sein muss. Herkömmlicherweise wird deshalb während des Startvorganges der Brennkraftmaschine auch die Winkelstellung der Nockenwelle erfasst, um daraus die Phasenlage der Kurbelwelle abzuleiten.

Nachteilig an den bekannten Einspritzanlagen ist deshalb die Tatsache, dass sowohl die Winkelstellung der Nockenwelle als auch die Winkelstellung der Kurbelwelle erfasst werden muss, was relativ aufwendig ist.

Der Erfindung liegt deshalb die Aufgabe zugrunde, bei einer Einspritzanlage möglichst einfach sowohl die Phasenlage als auch die Winkelstellung der Kurbelwelle bzw. der Nockenwelle zu ermitteln.

Die Erfindung wird, ausgehend von einem bekannten Drehwinkelgeber zur Erfassung der Winkelstellung einer Welle gemäß dem Oberbegriff des Anspruchs 1, durch die kennzeichnenden Merkmale des Anspruchs 1 gelöst. Hinsichtlich der Einspritzanlage bzw. des zugehörigen Betriebsverfahrens wird die Aufgabe durch die Merkmale der Ansprüche 7 bzw. 8 gelöst.

Die Erfindung umfasst die allgemeine technische Lehre, einen Drehwinkelgeber vorzusehen, der sowohl eine relative Drehwinkelbestimmung als auch eine absolute Drehwinkelbestimmung bzw. eine Phasenlagenbestimmung ermöglicht.

Es ist deshalb ein Drehwinkelgeber mit einem drehbar gelagerten Geberrad vorgesehen, das mit der Nockenwelle, der Kurbelwelle oder einer sonstigen Welle mechanisch gekoppelt ist, deren Winkelstellung erfasst werden soll. Das Geberrad weist hierbei über den Umfang verteilt zahlreiche Markierungen eines ersten Typs auf, die durch einen Sensor erfassbar sind und eine relative Drehwinkelbestimmung ermöglichen. Die Markierungen des ersten Typs sind vorzugsweise äquidistant angeordnet und einheitlich ausgestaltet. So kann das Geberrad beispielsweise als Zahnrad ausgeführt sein, wobei jeder Zahn eine Markierung des ersten Typs bildet.

Weiterhin sind über den Umfang des Geberrades verteilt mehrere Markierungen eines zweiten Typs angeordnet, die durch einen Sensor erfassbar sind, wobei sich die Markierungen des zweiten Typs untereinander unterscheiden, um die Bestimmung des absoluten Drehwinkels oder der Phasenlage der Welle zu ermöglichen. So ist es beispielsweise möglich, zu Beginn jedes Quadranten des Geberrades eine Markierung des zweiten Typs anzuordnen, so dass anhand der Markierungen des zweiten Typs ermittelt werden kann, in welchem Quadranten sich die Welle befindet.

Die Markierungen des zweiten Typs bestehen aus zwei Zahnlücken, zwischen denen jeweils eine vorgegebene Zahl von Zähnen angeordnet ist, wobei sich die Markierungen des zweiten Typs durch die Zahl von Zähnen zwischen den Zahnlücken unterscheiden. Die Auswertungseinheit für den erfindungsgemäßen Drehwinkelgeber überprüft also laufend, ob eine Zahnlücke vorliegt, um anschließend die Zähne bzw. Impulse bis zu der nächsten Zahnlücke zu zählen. Die Anzahl der Zähne zwischen benachbarten Zahnlücken kann dann beispielsweise einem Brennraum einer Brennkraftmaschine zugeordnet werden, der für den nächsten Einspritzvorgang vorgesehen ist.

Vorzugsweise sind die Markierungen des zweiten Typs äquidistant über den Umfang des Geberrades verteilt angeordnet.

Im Rahmen der Erfindung ist weiterhin vorgesehen, den vorstehend beschriebenen erfindungsgemäßen Drehwinkelgeber zur Ansteuerung einer Einspritzanlage zu verwenden. Vorzugsweise ist hierbei ein Drehwinkelgeber für die Nockenwelle und ein Drehwinkelgeber für die Kurbelwelle vorgesehen, wobei die Impuls-/Zähnezahl des Geberrades für die Nockenwelle vorzugsweise eine ganzzahliges Vielfaches der Impuls-/Zähnezahl des Geberrades für die Kurbelwelle ist.

Darüber hinaus umfasst die Erfindung noch ein Betriebsverfahren für eine derartige Einspritzanlage mit dem erfindungsgemäßen Drehwinkelgeber.

Schließlich ist noch zu erwähnen, dass der erfindungsgemäße Drehwinkelgeber auch zur Ansteuerung der Einspritzanlage von mehrzylindrigen Brennkraftmaschinen mit beispielsweise 6, 8, 10 oder 12 Zylindern verwendet werden kann. Hierbei ist es möglich, dass die Synchronisation nicht direkt bei der Referenzmarke erfolgt, sondern zu dieser zeitlich versetzt ist. Beispielsweise kann die Synchronisation nach einer vorgegebenen Zahl von Zähnen bzw. Impulsen nach der Referenzmarke erfolgen.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine erfindungsgemäße Einspritzanlage mit einem erfindungsgemäßen Drehwinkelgeber,
- Figur 2: ein Impulsdiagramm des erfindungsgemäßen Drehwinkelgebers sowie
- Figur 3a: ein Geberrad des erfindungsgemäßen Drehwinkelgebers sowie
- Figur 3b: ein alternatives Ausführungsbeispiel eines Geberrades.

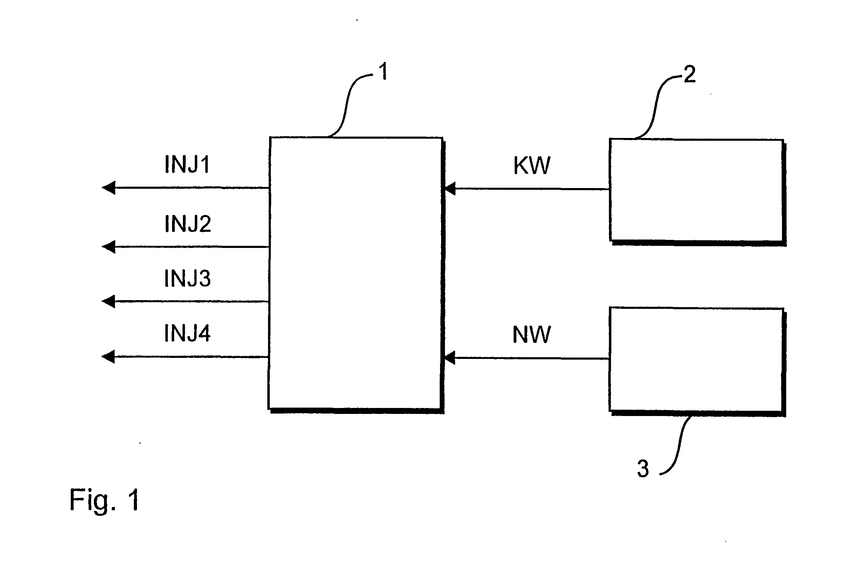

Das in Figur 1 dargestellte schematische Blockschaltbild zeigt eine Einspritzanlage 1 zur Ansteuerung von vier Injektoren INJ1-INJ4 wobei die Einspritzanlage 1 mit einem Drehwinkelgeber 2 für die Kurbelwelle und einem Drehwinkelgeber 3 für die Nockenwelle verbunden ist.

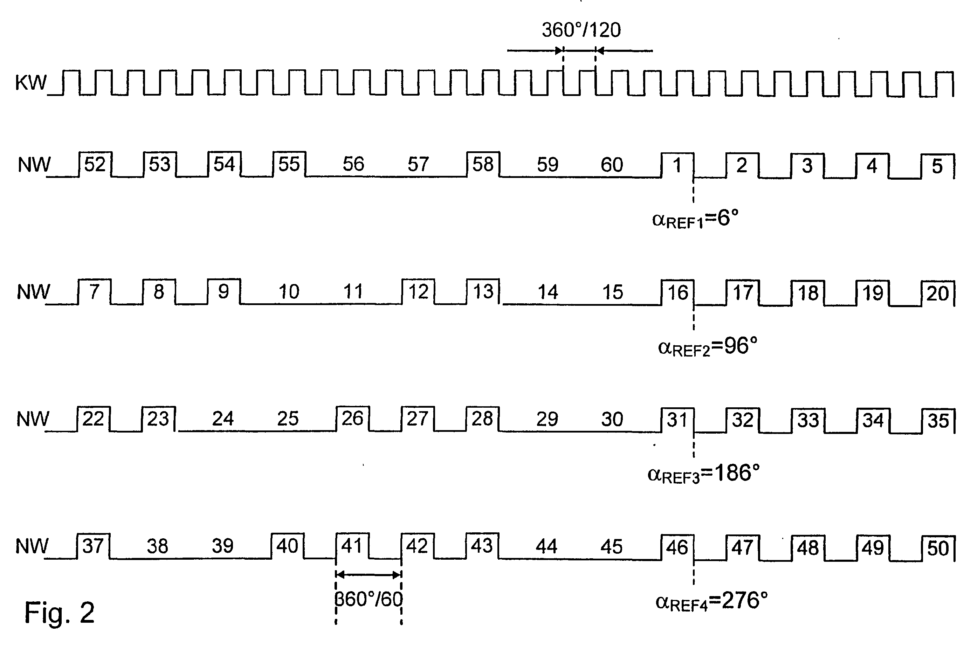

Der Drehwinkelgeber 2 für die Kurbelwelle ist weitgehend herkömmlich aufgebaut und wird deshalb im folgenden nicht weiter beschrieben. Die von dem Drehwinkelgeber 2 erzeugte Impulsfolge KW ist jedoch in dem in Figur 2 dargestellten Impulsdiagramm wiedergegeben. Aus dem Impulsdiagramm ist ersichtlich, dass der Drehwinkelgeber 2 für die Kurbelwelle eine kontinuierliche Impulsfolge erzeugt, die lediglich eine relative Drehwinkelbestimmung erlaubt, wohingegen die Phasenlage der Kurbelwelle aus der von dem Drehwinkelgeber 2 erzeugten Impulsfolge nicht hervorgeht.

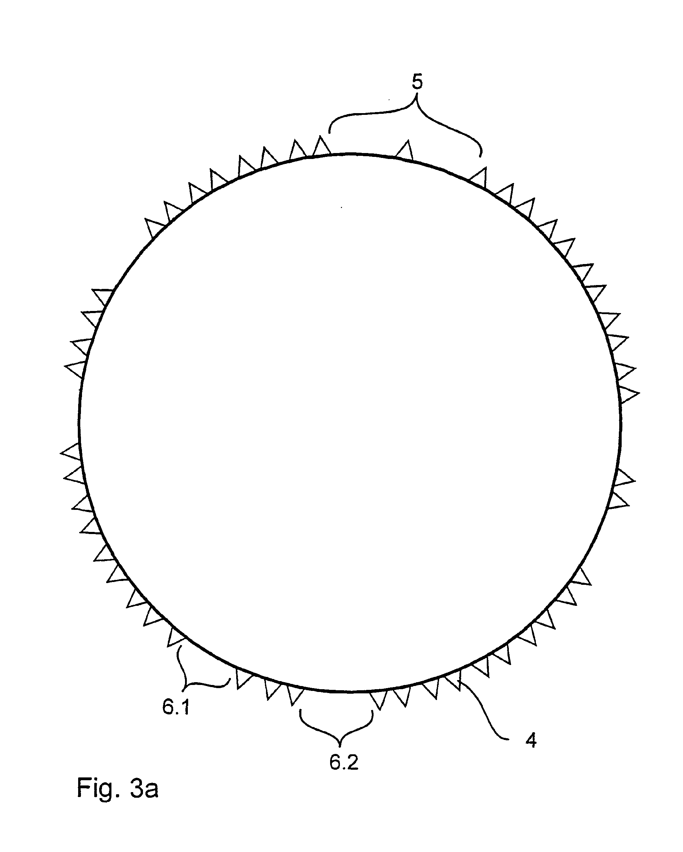

Der Drehwinkelgeber 3 für die Nockenwelle ist dagegen in besonderer Weise ausgestaltet, wie im folgenden beschrieben wird. So weist der Drehwinkelgeber 3 ein als Zahnrad ausgebildetes und in Figur 3a dargestelltes Geberrad mit einer Zahnteilung von 60 Zähnen auf, wobei jeder Zahn eine Markierung 4 eines ersten Typs bildet, die eine relative Drehwinkelbestimmung erlaubt.

Zusätzlich weist das Geberrad des Drehwinkelgebers 3 vier Markierungen 5 eines zweiten Typs auf, die jeweils aus zwei Zahnlücken 6.1, 6.2 von jeweils zwei Zähnen bestehen, zwischen denen jeweils eine vorgegebene Zahl von Zähnen angeordnet ist. Die Zahl der zwischen den Zahnlücken 6.1, 6.2 angeordneten Zähnen bestimmt hierbei die Nummer des für einen Einspritzvorgang vorgesehenen Brennraums der Brennkraftmaschine.

Die in der Einspritzanlage 1 angeordnete Auswertungseinrichtung für den Drehwinkelgeber 3 zählt deshalb nach dem Erkennen einer Zahnlücke 6.1, 6.2 die Anzahl der folgenden Impulse bzw. Zähne 4 bis zu der nächsten Zahnlücke. Liegt der ermittelte Wert zwischen 1 und der Anzahl der Brennräume der Brennkraftmaschine, so wird die nächste fallende Impulsflanke als Referenzmarke α_{REF} der zuvor ermittelten Brennraumnummer verwendet. Falls der bei dem Zählvorgang ermittelte Wert von Impulsen zwischen den Zahnlücken 6.1, 6.2 dagegen größer als die Anzahl der Brennräume ist, so handelt es sich nicht um eine Markierung 5 des zweiten Typs und es wird demzufolge auch keine Referenzmarke erzeugt.

Die vorstehend beschriebenen Markierungen 5 des zweiten Typs ermöglichen vorteilhaft eine Zylinderauswahl bzw. eine Synchronisierung anhand des Nockenwellensignals, so dass ein Betrieb der Einspritzanlage auch bei einem Ausfall des Drehwinkelgebers 2 für die Kurbelwelle möglich ist.

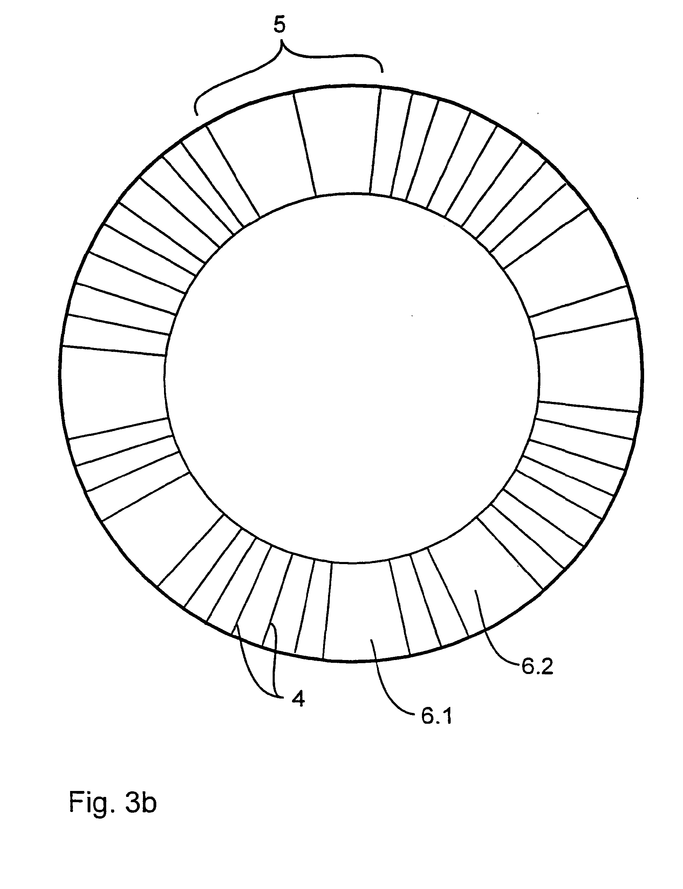

Figur 3b zeigt eine alternative Ausführungsform eines Geberrades für den Drehwinkelgeber 3 der Nockenwelle, die weitgehend mit dem vorstehend beschriebenen und in Figur 3a dargestellten Ausführungsbeispiel übereinstimmt, so dass im folgenden dieselben Bezugszeichen verwendet werden und zur Vermeidung von Wiederholungen auf die vorstehende Beschreibung verwiesen wird.

Die Besonderheit des Geberrades gemäß Figur 3b besteht darin, dass anstelle von Zähnen radial verlaufende Strichmarkierungen vorgesehen sind, die von einem optischen Sensor abgetastet werden können. Die einzelnen radial verlaufenden Striche bilden hierbei jeweils Markierungen 4 des ersten Typs, wohingegen die Markierungen 5 des zweiten Typs jeweils aus zwei Lücken 6.1, 6.2 mit einer Winkelerstreckung von zwei Strichen bestehen, zwischen denen eine vorgegebene Anzahl von radial verlaufenden Strichen angeordnet ist, welche die Nummer des jeweiligen Brennraums angibt.

Die Erfindung ist nicht auf die vorstehend beschriebenen bevorzugten Ausführungsbeispiele beschränkt. Vielmehr ist eine Vielzahl von Varianten und Abwandlungen denkbar, die von dem Erfindungsgedanken Gebrauch machen und deshalb ebenfalls in den Schutzbereich fallen.

## Patentansprüche

1. Drehwinkelgeber zur Erfassung der Winkelstellung einer Welle, insbesondere zur Erfassung der Winkelstellung einer Nockenwelle oder einer Kurbelwelle einer Brennkraftmaschine mit mehreren Brennräumen, mit
einem drehbar gelagerten und mit der Welle mechanisch gekoppelten Geberrad,
wobei über den Umfang des Geberrades verteilt zahlreiche Markierungen (4) eines ersten Typs angeordnet sind, die durch einen Sensor erfassbar sind und eine relative Drehwinkelbestimmung ermöglichen,
wobei über den Umfang des Geberrades verteilt mehrere Markierungen (5) eines zweiten Typs angeordnet sind, die durch einen Sensor erfassbar sind,
wobei sich die Markierungen (5) des zweiten Typs untereinander unterscheiden, um die Bestimmung des absoluten Drehwinkels oder der Phasenlage der Welle zu ermöglichen oder eine Auswahl eines Brennraums für die Kraftstoffeinspritzung zu erlauben, wobei das Geberrad als Zahnrad ausgebildet ist und die Markierungen (4) des ersten Typs Zähne sind,
**dadurch gekennzeichnet,**
**daß** die Markierungen (5) des zweiten Typs aus zwei Zahnlücken (6.1, 6.2) bestehen, zwischen denen jeweils eine vorgegebene Zahl von Zähnen angeordnet ist, wobei sich die Markierungen (5) des zweiten Typs durch die Zahl von Zähnen zwischen den Zahnlücken (6.1, 6.2) unterscheiden.

2. Drehwinkelgeber nach Anspruch 1,
**dadurch gekennzeichnet,**
**daß** sich die Markierungen (5) des zweiten Typs untereinander durch ihre Winkelerstreckung unterscheiden.

3. Drehwinkelgeber nach Anspruch 1 oder 2,
**dadurch gekennzeichnet,**
**daß** die Markierungen (5) des ersten Typs mindestens in Teilabschnitten des Geberrades äquidistant angeordnet sind.

4. Drehwinkelgeber nach mindestens einem der vorhergehenden Ansprüche,
**dadurch gekennzeichnet,**
**daß** die Zahl der Markierungen (5) des zweiten Typs gleich der Zahl von Brennräumen der Brennkraftmaschine ist, um jeder Markierung (5) des zweiten Typs einen Brennraum der Brennkraftmaschine zuzuordnen.

5. Drehwinkelgeber nach einem der vorhergehenden Ansprüche,
**dadurch gekennzeichnet,**
**daß** die Zahnlücken (6.1, 6.2) jeweils eine Winkelerstreckung von mindestens zwei Zähnen (4) aufweisen.

6. Drehwinkelgeber nach mindestens einem der vorhergehenden Ansprüche
**dadurch gekennzeichnet,**
**daß** die Markierungen (5) des zweiten Typs äquidistant über den Umfang des Geberrades verteilt angeordnet sind.

7. Einspritzanlage für eine Brennkraftmaschine mit einem Drehwinkelgeber nach einem der vorhergehenden Ansprüche zur Bestimmung des Einspritzzeitpunktes für die Brennräume der Brennkraftmaschine.

8. Betriebsverfahren für eine Einspritzanlage einer Brennkraftmaschine mit einem Drehwinkelgeber nach einem der Ansprüche 1 bis 6, mit den folgenden Schritten:
- Erfassung der Markierungen (4) des ersten Typs während der Drehung der Welle,
- Festlegung eines Einspritzzeitpunkts anhand der Markierungen (4) des ersten Typs,
- Erfassung der Markierungen (5) des zweiten Typs und der zugehörigen Winkelstellung der Welle,
- Auswahl eines Brennraums der Brennkraftmaschine anhand der jeweiligen Markierung (5) des zweiten Typs,
- Einspritzung von Kraftstoff in den anhand der Markierungen (5) des zweiten Typs ausgewählten Brennraum mit dem anhand der Markierungen (4) des ersten Typs festgelegten Einspritzzeitpunkt,
**dadurch gekennzeichnet,**
**daß** nach einer Lücke (6.1, 6.2) der Markierungen (4) des ersten Typs die Anzahl der Markierungen (4) des ersten Typs bis zu der nächsten Lücke (6.1, 6.2) der Markierungen (4) des ersten Typs gezählt wird, wobei die Auswahl eines Brennraums für die Einspritzung anhand der Zahl von Markierungen (4) des ersten Typs zwischen den beiden Lücken (6.1, 6.2) erfolgt.

9. Betriebsverfahren nach Anspruch 8,
**dadurch gekennzeichnet,**
**daß** die Winkelerstreckung der Markierungen (5) des zweiten Typs ermittelt wird, wobei die Auswahl eines Brennraums anhand der Winkelerstreckung der Markierungen (5) des zweiten Typs erfolgt.

10. Betriebsverfahren nach Anspruch 8 oder 9,
**dadurch gekennzeichnet,**
**daß** die Zahl der Markierungen (4) des ersten Typs zwischen zwei Lücken (6.1, 6.2) mit der Zahl von Brennräumen verglichen wird, wobei eine Auswahl eines Brennraums nur erfolgt, wenn die Zahl der Markierungen (4) des ersten Typs zwischen den beiden Lücken (6.1, 6.2) kleiner oder gleich der Zahl von Brennräumen der Brennkraftmaschine ist.

11. Betriebsverfahren nach Anspruch 8, 9 oder 10,
**dadurch gekennzeichnet,**
**daß** nach zwei aufeinanderfolgenden Lücken (6.1, 6.2) der Markierungen (4) des ersten Typs die nächste Markierung (4) des ersten Typs als Referenzwinkel (α_{REF}) für die Auswahl eines Brennraums übernommen wird.

## Claims

1. Rotation angle detector for detecting the angular position of a shaft, in particular for detecting the angular position of a camshaft or crankshaft of an internal combustion engine comprising a plurality of combustion chambers, said rotation angle detector having
a rotatably mounted detector wheel which is mechanically coupled to the shaft,
with numerous markings (4) of a first type being arranged distributed around the circumference of the detector wheel, which markings (4) can be detected by a sensor and enable a relative rotation angle to be determined,
with a plurality of markings (5) of a second type being arranged distributed around the circumference of the detector wheel, which markings (5) can be detected by a sensor,
with the markings (5) of the second type being different from one another in order to enable the absolute rotation angle or phase position of the shaft to be determined or to permit a combustion chamber to be selected for the fuel injection, the detector wheel being embodied as a toothed wheel and the markings (4) of the first type being teeth,
**characterised in that**
the markings (5) of the second type consist of two tooth spaces (6.1, 6.2) between which a predefined number of teeth are arranged in each case, the markings (5) of the second type being distinguished from one another by the number of teeth between the tooth spaces (6.1, 6.2).

2. Rotation angle detector according to claim 1,
**characterised in that**
the markings (5) of the second type are distinguished from one another by their angular extent.

3. Rotation angle detector according to claim 1 or 2,
**characterised in that**
the markings (4) of the first type are arranged equidistantly at least in sub-sections of the detector wheel.

4. Rotation angle detector according to one or more of the preceding claims,
**characterised in that**
the number of markings (5) of the second type is equal to the number of combustion chambers in the internal combustion engine so that each marking (5) of the second type can be assigned one combustion chamber of the internal combustion engine.

5. Rotation angle detector according to one of the preceding claims,
**characterised in that**
the tooth spaces (6.1, 6.2) in each case have an angular extent of at least two teeth (4).

6. Rotation angle detector according to one or more of the preceding claims,
**characterised in that**
the markings (5) of the second type are arranged equidistantly distributed around the circumference of the detector wheel.

7. Injection system for an internal combustion engine having a rotation angle detector according to one of the preceding claims for determining the injection time for the combustion chambers of the internal combustion engine.

8. Operating method for an injection system of an internal combustion engine having a rotation angle detector according to one of claims 1 to 6, comprising the following steps:
- detection of the markings (4) of the first type while the shaft is rotating,
- definition of an injection time on the basis of the markings (4) of the first type,
- detection of the markings (5) of the second type and the associated angular position of the shaft,
- selection of a combustion chamber of the internal combustion engine on the basis of the respective marking (5) of the second type,
- injection of fuel into the combustion chamber selected on the basis of the markings (5) of the second type with the injection time defined on the basis of the markings (4) of the first type.
**characterised in that**
after a space (6.1, 6.2) in the markings (4) of the first type the number of markings (4) of the first type up to the next space (6.1, 6.2) in the markings (4) of the first type are counted, a combustion chamber for the injection being selected on the basis of the number of markings (4) of the first type between the two spaces (6.1, 6.2).

9. Operating method according to claim 8,
**characterised in that**
the angular extent of the markings (5) of the second type is determined, a combustion chamber being selected on the basis of the angular extent of the markings (5) of the second type.

10. Operating method according to claim 8 or 9,
**characterised in that**
the number of markings (4) of the first type between two spaces (6.1, 6.2) is compared with the number of combustion chambers, a combustion chamber only being selected if the number of markings (4) of the first type between the two spaces (6.1, 6.2) is less than or equal to the number of combustion chambers in the internal combustion engine.

11. Operating method according to claim 8, 9 or 10,
**characterised in that**
after two successive spaces (6.1, 6.2) in the markings (4) of the first type, the next marking (4) of the first type is used as a reference angle (α_{REF}) for the selection of a combustion chamber.

## Revendications

1. Détecteur d'angle de rotation pour détecter la position angulaire d'un arbre, en particulier pour détecter la position angulaire d'un arbre à cames ou d'un vilebrequin d'un moteur à combustion interne comprenant plusieurs chambres de combustion, comprenant
une roue de détecteur montée en rotation et accouplée mécaniquement à l'arbre,
de nombreux marquages (4) d'un premier type étant répartis sur la périphérie de la roue de détecteur, pouvant être détectés par un capteur et permettant une détermination relative de l'angle de rotation,
plusieurs marquages (5) d'un deuxième type étant répartis sur la périphérie de la roue de détecteur et pouvant être détectés par un capteur,
les marquages (5) du deuxième type se distinguant les uns des autres pour permettre la détermination de l'angle de rotation absolu ou de la position de phase de l'arbre ou pour permettre une sélection d'une chambre de combustion pour l'injection de carburant, la roue de détecteur étant réalisée sous forme de roue dentée et les marquages (4) du premier type étant des dents,
**caractérisé en ce que**
les marquages (5) du deuxième type se composent de deux absences de dents (6.1, 6.2) entre lesquelles est prévu à chaque fois un nombre prédéfini de dents, les marquages (5) du deuxième type se distinguant par le nombre de dents entre les absences de dents (6.1, 6.2).

2. Détecteur d'angle de rotation selon la revendication 1,
**caractérisé en ce que**
les marquages (5) du deuxième type se distinguent les uns des autres par leur plage angulaire.

3. Détecteur d'angle de rotation selon la revendication 1 ou 2,
**caractérisé en ce que**
les marquages (5) du premier type sont disposés de manière équidistante au moins dans des régions partielles de la roue de détecteur.

4. Détecteur d'angle de rotation selon l'une quelconque des revendications précédentes,
**caractérisé en ce que**
le nombre des marquages (5) du deuxième type est identique au nombre des chambres de combustion du moteur à combustion interne, afin d'associer à chaque marquage (5) du deuxième type une chambre de combustion du moteur à combustion interne.

5. Détecteur d'angle de rotation selon l'une quelconque des revendications précédentes,
**caractérisé en ce que**
les absences de dents (6.1, 6.2) présentent à chaque fois une plage angulaire d'au moins deux dents (4).

6. Détecteur d'angle de rotation selon l'une quelconque des revendications précédentes,
**caractérisé en ce que**
les marquages (5) du deuxième type sont répartis de manière équidistante sur la périphérie de la roue de détecteur.

7. Installation d'injection pour un moteur à combustion interne comprenant un détecteur d'angle de rotation selon l'une quelconque des revendications précédentes pour déterminer l'instant d'injection pour les chambres de combustion du moteur à combustion interne.

8. Procédé de fonctionnement pour une installation d'injection d'un moteur à combustion interne comprenant un détecteur d'angle de rotation selon l'une quelconque des revendications 1 à 6, comprenant les étapes suivantes :
- détection des marquages (4) du premier type pendant la rotation de l'arbre,
- établissement d'un instant d'injection à l'aide des marquages (4) du premier type,
- détection des marquages (5) du deuxième type et de la position angulaire associée de l'arbre,
- sélection d'une chambre de combustion du moteur à combustion interne à l'aide du marquage respectif (5) du deuxième type,
- injection de carburant dans la chambre de combustion sélectionnée à l'aide des marquages (5) à l'instant d'injection établi à l'aide des marquages (4) du premier type,
**caractérisé en ce**
**qu'**après une absence (6.1, 6.2) des marquages (4) du premier type, le nombre des marquages (4) du premier type est compté jusqu'à l'absence suivante (6.1, 6.2) des marquages (4) du premier type, la sélection d'une chambre de combustion pour l'injection s'effectuant à l'aide du nombre des marquages (4) du premier type entre les deux absences (6.1, 6.2).

9. Procédé de fonctionnement selon la revendication 8,
**caractérisé en ce que**
la plage angulaire des marquages (5) du deuxième type est détectée, la sélection d'une chambre de combustion s'effectuant à l'aide de la plage angulaire des marquages (5) du deuxième type.

10. Procédé de fonctionnement selon la revendication 8 ou 9,
**caractérisé en ce que**
le nombre des marquages (4) du premier type entre deux absences (6.1, 6.2) est comparé avec le nombre des chambres de combustion, une sélection d'une chambre de combustion n'ayant lieu que si le nombre des marquages (4) du premier type entre les deux absences (6.1, 6.2) est inférieur ou égal au nombre des chambres de combustion du moteur à combustion interne.

11. Procédé de fonctionnement selon la revendication 8, 9 ou 10,
**caractérisé en ce**
**qu'**après deux absences successives (6.1, 6.2) des marquages (4) du premier type, le marquage suivant (4) du premier type est pris comme angle de référence (α_{REF}) pour la sélection d'une chambre de combustion.
